# EUROPEAN PATENT APPLICATION

(11) **EP 2 368 969 A1**
(43) Date of publication of application: **28.09.2011**
(21) Application number: 10382057.7
(22) Date of filing: 15.03.2010
(51) Int. Cl.: C10L 5/46, C10L 5/48

(54) **Process for producing non-flammable solid combustible products from flammable products such as industrial residues and solid combustible products obtained therefrom**

(71) Applicant: Alquimia Soluciones Ambientales S.L., 13250 Daimiel (Ciudad Real) (ES)
(72) Inventor: Rodríguez Mayor, Lourdes, 13250, Daimiel (Ciudad Real) (ES)
(74) Representative: Elzaburu Marquez, Alberto

(57) **Abstract**

Process to manufacture a solid fuel product from at least one solid or viscous flammable material with a flashpoint below 54°C and at least one solid or viscous adsorbent material with a flashpoint above 55°C. The process is capable of converting combustible waste, and therefore dangerous, in a non-flammable and therefore non dangerous, that other product is useful as fuel even in the home.

## Description

### Field of the Invention

The invention generally relates to processes to manufacture non-flammable solid fuels from flammable products like industrial wastes, and the fuel products thus obtained

### State of the art

The total waste generated in Europe each year is estimated in around 3.000 million tonnes, representing 3,8 tonnes per capita in Western Europe, 4,4 tons per capita in Central Europe and 6,3 tonnes per capita in Eastern Europe. Total waste generation shows little sign of decline in the great part of European countries. Western Europe, Spain and the United Kingdom between 1995 and 2000 showed a total decrease in the quantities produced, but thereafter the total waste production has stabilized. In Central and Eastern Europe the effect is less clear: some countries have experienced an increase (Czech Republic, Hungary and Poland), while in Estonia and Slovenia seems to identify a slight decrease. In general, it is not possible to establish a single trend. The generation of hazardous waste (HW) in Europe is usually less than 1% of total waste produced. Since the mid-90s, the amount of HW generated in some European countries has grown dramatically while others have achieved a noticeable decrease in its generation. For example, in Austria has increased 62% while in Denmark has decreased by 57%.

The problem of waste varies with the type of waste, its origin, its nature, the quantity produced and, above all, the management (First National Conference on Waste Prevention, 2006). Regarding hazardous waste, the main problem is associated with the danger of them, mainly due to the high flammability of some components, and the toxicity of certain compounds and / or elements that go together with the waste and make necessary a concrete legislation and a particular management of them. The new European Directive 2008/98/EC on waste tries to introduce changes in their management, such as to simplify the regulatory framework, to clarify the terms of recovery and disposal, to clarify the requirements for mixture of waste to introduce procedures to determine when a waste residue, in certain cases, ceases to be and in general, to look for a new framework for waste management. According to that Directive, the requirements to be met by a material, result of a production process to be considered as a by-product and not as waste are:
- Safe use in another production process
- Substitute other raw material equal
- No previous treatment
- No cause relevant environmental effects

Current Waste Management actions are aimed to prevent the generation and recovery of resources contained therein, to the extent that the available techniques allow.

For non-reusable or recyclable waste remain only two treatment options: energy recovery in its various forms or modalities, and disposal by incineration without energy recovery or by security deposit or dump. However, it is a fact that in many countries a strong social opposition to waste energy recovery and, in general, to incineration. The Spanish Waste Law only consider valuable those HW that meet certain technical, environmental and energetic characteristics that facilitate such treatment

Morrison, in U.S. 5.888,256, described a methodology for the production of waste-derived fuels, proposing the optimal composition to reach its maximum energy efficiency. Also, Trezza and Scian (2000) examined the use of industrial waste as an economic alternative to conventional fuels. More specifically, their work was focused on the application as fuels from used oil mixtures and ash pyrolysis and their effect on the quality of the cement clinker obtained. The tests were performed in real furnace where a 30% of the conventional fuel was replaced by the fuel waste previously mentioned. The product was characterized in detailed and it was compared with conventional clinker.

Scala and Chiron (2004) analyzed the combustion in a fluidized bed of different types of waste (municipal and industrial). They investigated the effect of the composition of these materials on the production of energy and the characteristics of the gases emitted into the atmosphere. These materials were introduced grounded and untreated into the furnace in order to maximize energy efficiency.

Mokrzycki and Uliasz-Bochenczyck (2004 a&b) examined the use of waste with different content in combustible organic material as alternative fuels in the manufacture of cement as alternative fuels. They studied the feasibility of this use by the size of the organic fraction and the advantages and disadvantages that this use represented.
In all considered cases the materials were used in a direct way without previous treatment.

Gabel and Tillman, in a study conducted in 2005, described in depth the use of different types of hazardous and non hazardous waste in Swedish cement factories for the production of energy and alternative materials.

With a similar aim, Lopez et col. in 1999, carried out a study to assess the treatment of various HW from organic origin with sepiolite to subsequent recovery or disposal. Among the wastes included in the study there were products of manufacturing industries of paints, cosmetics, resins and liquid detergents. These wastes were mixed with clay in different proportions between 30 and 60% in order to obtain a granulated solid with low moisture content. The products obtained in such manner with a high mechanical and chemical resistance, could be used as alternative fuels in cement clinker production.

Some research studies have been performed by different cement factories, such those developed by Murcia (1998) in Hisalba's factory in Gador or the study made at Lemona factory (Bizkaia) in 2005.

Finally, some researchers have attempted to model the substitution of conventional fuels by alternative fuels in order to predict the results that this substitution could produce in the clinker quality, the emissions and the energy savings. Käänte et al. (2000, 2001 and 2002).

On the other hand, some studies have also examined the energetic valuation from HW out of the cement industry. So, Lee et al. (2003) studied the co-incineration of paper sludge with high calorific value in a pilot plant with an incineration system specifically designed to facilitate the entry of such waste to the furnace, analyzing the level of energy reached. Lunghi and Burzacca (2004) sought to improve the management of various types of waste by recovering the energy contained therein through its use in gasification plants in combined cycle. The proposed waste replaced at a rate of 30% the conventional fuel used at this kind of plants.

At the bibliography related to patents are found also numerous methods to inert, encapsulate or treat different wastes, both hazardous and non-hazardous, mainly with the purpose to increase the manageability. Thus, for example, at WO99/51709 are described molded solid fuels obtained from waste, that comprises a binder, in this case from the oil processing industry. Similar cases occur, for example, at KR2009004307, where the additive is a type of plastic, at GB562798 Portland cement, and at US4875905 a cellulosic-type material. However, in all these cases the added additive has a binder function and thus serves only to coalesce the various components of fuel, without any chemical modification of these components in the final product. By contrast, in the procedures and products of the present invention, is produced a chemical modification of the components involved, this means that a new product with physical-chemical characteristics distinct from those obtained in the previous technique is produce. The physical-chemical characteristics bring the advantages of a high calorific value together with a zero flammability. Thus, from a waste, whether hazardous or non-hazardous, a non dangerous product is obtained useful as fuel, even in the domestic environment.

Therefore, we can assert that at present, although there are some forms of energy recovery of such waste, they just focus on direct use as fuels in cement industry and its management is still complex, since they are not regularly subjected to treatments to reduce or eliminate their danger, except for a few existing facilities that conduct its homogenization.

### Summary of the Invention

The aim of the present invention is to provide a method for obtaining non-flammable solid fuel products from flammable products such as industrial waste, hazardous and non-hazardous, and optionally type-cay additives, by mixing the right proportions of them, depending on the ability of immobilization of volatile components of any of them, and so produced the solid fuel.

A product is flammable because under certain conditions, which are standardized, produces fumes that are flammable. Consequently, a product is flammable when in these conditions, produces at least a minimum amount of flammable vapours, while it is non-flammable when in such conditions, it does not produce flammable vapours. Regarding this, the products can be classified into three groups:
- Non-flammable product: when it has a flashpoint above 55° C.
- Flammable product: when it has a flashpoint between 35 and 54° C.
- Highly flammable product: when it has a flashpoint below 35° C.

Consequently, to convert a flammable into a non-flammable product is not enough to simply mix the flammable with a non-flammable so that in the mixture, both products individually coexist because, as stated above, the product will remain flammable by existing a minimal amount of flammable vapours. To convert a flammable product into a non-flammable is required the immobilization of the flammable components of this product, so that it does not give off flammable vapours.

In the present invention, the inventors have found that the immobilization can be achieved by adsorption of the components responsible for the flammability of a flammable solid or paste material through a stage of combination between the flammable material and an absorbent material that has the following physical-chemical properties:
a) a BET specific surface area above 50 m²/g;
b) an average particle diameter of less than 1 mm and
c) a solvent adsorption capacity of at least 80% by weight of solvent on the weight of the adsorbent material.

Moreover, when selecting an adsorbent material for a flammable material, preferably it will be taken into account the nature of the volatile compounds responsible for the flammability of flammable material, so that the lower the flashpoint, the greater must be the BET specific surface and/or the solvent adsorption capacity of the adsorbent material. For example, in the case of a flammable material with the same flashpoint could be used an adsorbent material with high BET but with a low solvent adsorption capacity or an absorbent material with low BET but high solvent adsorption capacity. However, if the flashpoint of the flammable material decreases, for the same solvent adsorption capacity of the adsorbent material, the BET specific surface area must increase. Thus, by increasing the value of BET specific surface and adsorption capacity of the material for the substances responsible for flammability; increases the amount of flammable material that can be treated with the same amount of the required adsorbent material.

Thus, it is possible to obtain a solid fuel, with high calorific value and reduced flammability because of its high flashpoint, making it suitable for any type of use, even domestic. To do so, and without wishing to be bound by theory, the inventors believe that the flammable material and the adsorbent material are chemically combined with each by the formation of covalent and/or hydrogen bonds, so that the chemical reaction between the two leads to the immobilization of flammable components of the flammable material, which becomes non-flammable.

The flammable and/or the adsorbent material are preferably selected from by-products of production processes (materials commonly designated as "industrial waste"). Alternatively, the adsorbent material can be selected from other inorganic materials, particularly clays such as sepiolite or attapulgite.

Accordingly, a first aspect of the invention relates to a procedure for producing a solid fuel product from at least a flammable solid or pasty material with a flashpoint below 54°C and at least one adsorbent solid or pasty material with a flashpoint above 55°C. The process is characterized for including a mixture phase of the said flammable material with an absorbent material which has the following physico-chemical characteristics:
a) a BET specific surface area above 50 m²/g;
b) an average particle diameter of less than 1 mm and
c) a solvent adsorption capacity of at least 80% by weight of solvent in relation to the weight of adsorbent material,
so that the resulting solid fuel product has a calorific value higher than 1.500 kcal/kg and a flashpoint above 55°C.

A second aspect of the invention relates to fuel product resulting from the above procedure, characterized by having a calorific value higher than 1.500 kcal/kg and a flashpoint above 55°C. Considering the diversity of starting materials that can be used in the present invention and the variety of possible chemical reactions between them, it is not possible to define the resulting products per se but only through its manufacturing process.

As a result of the proposed process, a modification of the physical and chemical properties of the waste and the starting additive is produced. This modification implies the disappearance of the dangerousness of hazardous waste due to its flammability, its chemical transformation into a product with high calorific value and high flashpoint, together with the alteration of several physical properties. In addition, the fuel product structure differs from that of the starting residues and additives, constituting a completely different material, and occasionally even with a different physical state. These structural changes can be verified through Fourier Transform Infrared (FTIR) Spectrometry.

To accomplish the transformation of industrial waste, hazardous and non-hazardous, solid and pasty of organic origin, into products that can be used as alternative solid fuels, it has been followed a procedure consisting of a combination of one or more hazardous industrial waste of organic origin with an additive, usually a clay or with a non-hazardous waste, preferably also of organic origin, according to the procedure shown in the following scheme:

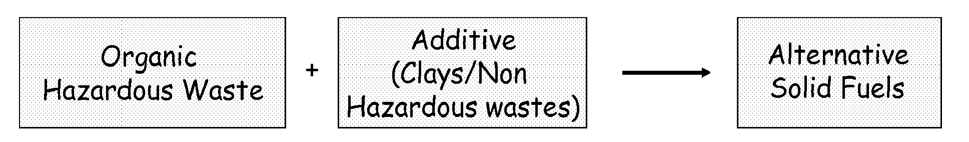

### Procedure to obtain alternative solid fuels from waste

In short, the fuel obtaining process of the present invention is based on the immobilization in the final product structure of the waste components that cause the dangerousness as a consequence of its flammability, maintaining or enhancing the fuel properties by removing its flammability and therefore, the danger associated with it. The main difference between the procedure proposed in this invention and the conventional energy recovery of waste, lies in the fact that the procedure proposed herein begins from one or more residues and an additive that react together to generate a new product, with physical and chemical properties different from those of the starting residues and additives and also different from those that would have the simple physical mixture of them. This is demonstrated through FTIR Spectrometry.

Throughout the present document is meant by waste material or waste, whether hazardous or non-hazardous, to any material result of a production process. In general, flammable materials that can be used in the present invention, among which are both non-hazardous and hazardous waste, show the features listed in Table 1. Within this document, it will be used indistinctively the terms "flammable material" or "waste" for any type of material used for the method of the invention, and the terms "absorbent material" or "additive" for materials that are combinable with the firsts according to the method of the invention.

**Table 1. Features of the flammable materials that can be used in the process of the invention**

| **Parameter** | **Value** |
|---|---|
| **pH (10%)** | 2-12 |
| **Calorific value (kcal/kg)** | 1.500-7.500 |
| **Ash (%)** | 0-95 |
| **Total sulphur (%)** | 0-20 |
| **Total halogens (%)** | 0-20 |
| **Total fluorine (%)** | 0-20 |
| **PCB's (ppm)** | 0-100 |
| **Heavy metals (ppm)** | 0-25.000 |
| **Viscosity (cP)** | >500 |
| **Physical state** | Solid, pasty, powdery |

Among others, in this group are included the following wastes: used or expired varnish, traces of varnish, paint sludge, paint dust, sanding dust with and without varnish, dry sludge of purification, dry paint, pasty paint, toner, waste tank bottom, residues from cleaning tanks, distillation bottom, filter cakes, pruning waste, agricultural industry waste, food processing industry waste, etc.., individually or in combination.

Regarding to the products obtained, these have substantially the characteristics listed in Table 2.

**Table 2. Features of the fuel products obtained**

| **Parameter** | **Value** |
|---|---|
| **pH (10%)** | 2-12 |
| **Flashpoint (°C)** | > 55 |
| **Calorific value (kcal/kg)** | 1.500-7.500 |
| **Ash (%)** | 0-75 |
| **Total sulphur (%)** | 0-5 |
| **Total halogen (%)** | 0-2 |
| **Total fluorine (%)** | 0-2 |
| **PCB's (ppm)** | 0-10 |
| **Heavy metals (ppm)** | 0-5.000 |
| **Physical state** | Solid |
| **Particle size (mm)** | <10 |
| **Presentation** | **powder, briquettes, pellets** |

When comparing properties of Tables 1 and 2, it is found that the new materials obtained through the production process described in this invention have always less content in ash, sulphur, halogen, total fluoride, PCBs and heavy metals being always non-flammable, which makes them non-hazardous in comparison with the starting flammable materials. Additionally, those viscous or pasty wastes become all cases solid products, with changes in the chemical structure.

The procedure for obtaining these fuels comprises the following steps:
1) Previous conditioning and waste preparation: This step may be optional and/or variable depending on the characteristics of the starting waste and may comprise:
   a. Drying: When the residue has humidity content above 15%, preferably it is dried with hot air at a temperature between 90 and 120°C during adequate time, usually 1 to 24 h, reaching humidity below 15%;
   b. Reduction in size: it is preferably performed when the waste has a particle size greater than 1 mm. Depending on the size of the starting solid, a milling with a hammer, balls or jaws mill may be sufficient (solids with size between 100 and 1 mm) or may be required a previous grinding with a jaw crusher (solid with particle size greater than 100 mm).
   c. Cut: If the sample has large threads, it is preferably carried out a cut to obtain small threads.
2) Premix: it preferably takes place only in the case of pasty solids. The target of the premix is the waste conditioning for the subsequent transport and mixture with other waste and with the additive. At this stage, it is added between 2 and 30% of additive such as clay, sand, or powdery non-hazardous waste with a pd (particle diameter) <1 mm, to a pasty solid residue, followed by a mixing process with a variable speed between 200 and 1500 rpm, during the necessary time (usually between 1 and 30 minutes) to obtain a gummy solid easy to transport.
3) Mixing: it takes place between one or more grounded or powdery solid wastes, and an additive such as clay, sand, or powdery non-hazardous waste with pd <1 mm, or between a gummy solid obtained by premix (stage 2) and a new amount of additive, or between the gummy solid and a grounded or powdery solid residue. At this stage, it is added between 2 and 80% of additive such as clay, sand, or powdery non-hazardous waste with pd <1 mm to a waste or a collection of grounded or powdery non-hazardous solid residues, followed by a mixing process with a variable speed between 200 and 1500 rpm, during the adequate time (usually between 1 and 30 minutes) to obtain an homogeneous fuel product with features already mentioned at the table 2.
4) Manufacture of briquettes or pellets, in case that fuel product marketing is as pellets or briquettes, we proceed to compaction by a granulator or pelletizer, preferably at a pressure between 50 and 250 bar during 1 to 10 minutes.

### Brief description of the figures

Figure 1. Individual comparison between the FTIR spectra of sepiolite and epoxy paint and the spectra of products obtained in Example 1 as a mixture of 40 and 60% by weight of such compounds.
Figure 2. Individual comparison between the FTIR spectra of sepiolite and resin and the spectra of products obtained in Example 2 as a mixture of 40 and 60% by weight of such compounds.
Figure 3. Individual comparison between the FTIR spectra of pomace and resin and the spectra of products obtained in Example 3 as a mixture of 40 and 60% by weight of such compounds.

### Experimental Examples

To determine the characterization parameters of the products obtained in the experimental examples, have used the methods and standards specified below:

| **PARAMETER** | **METHODOLOGY** |
|---|---|
| Total sulphur | Ion chromatography (UNE-EN ISO 10304 Standard) after combustion in bomb calorimeter. |
| Ash content | Incineration and gravimetric determination of the ash content UNE-EN ISO 6245 Standard |
| Net calorific value | Combustion in bomb calorimeter. UNE 164001 EX Standard |
| Humidity | Gravimetric determination (EN 12880 Standard) and Karl-Fischer titration (UNE 51216 Standard) |
| Flammability | Method of the closed cup equilibrium |
| | UNE-EN ISO 1523 Standard |
| | Paints, varnishes and similar products |
| | UNE-EN 456:1993 Standard |

### Example 1:

A powdery solid residue (powder paint solvent) with the features listed in Table 3 is mixed with a clayey additive (attapulgite) that also has the characteristics compile in Table 3.

**Table 3**

| | **Powder paint solvent** | **Attapulgite** |
|---|---|---|
| **Aspect** | powdery | S |
| **GCV (kcal/kg)** | 3.710 | Non flammable |
| **NCV (kcal/kg)** | 3.435 | Non flammable |
| **Humidity (%)** | 1,30 | 6,41 |
| **Fluorine (%)** | < 0,01 | 0,012 |
| **Chlorine (%)** | < 0,1 | < 0,1 |
| **Bromine (%)** | < 0,01 | < 0,01 |
| **Total Halogens (%)** | < 0,1 | < 0,113 |
| **Sulphur (%)** | 2,35 | < 0,01 |
| **Flashpoint (°C)** | 27 | > 100 |
| **Ash (%)** | 12,51 | 83,00 |
| **Solvent adsorption capacity (%)** | | 120 |
| **BET Specific Surface (m²/g)** | | 250 |
| **Average particle size (mm)** | | 0,045 |
| **Cd+TI (ppm)** | n.d. | n.d. |
| **Hg (ppm)** | n.d. | n.d. |
| **Sb+As+Pb+Cu+Cr+Mn+Ni+V+Sn (ppm)** | < 350 | < 600 |
| **Total metals (ppm)** | < 350 | < 600 |

These two components were mixed in different proportions, in the amounts shown in Table 4.

**Table 4**

| | **Powder Paint Solvent (PP)** | | | | |
|---|---|---|---|---|---|
| | **20%** | **40%** | **50%** | **60%** | **80%** |
| **Attapulgite (A)** | PP/A 20/80 | PP/A 40/60 | PP/A 50/50 | PP/A 60/40 | PP/A 80/20 |

Thus, fuel products described in Table 5 were obtained.

**Table 5**

| **Example** | **Product obtained** | **Humidity (%)** | **NCV (kcal/kg)** | **Ash (%)** | **Flashpoint (°C)** | **Sulphur content (%)** | **Aspect** |
|---|---|---|---|---|---|---|---|
| **1.1** | **PP/A** **80/20** | 1,27 | 3.141 | 29,00 | > 55 | 1,64 | Powdery Solid |
| **1.2** | **PP/A** **60/40** | 2,89 | 2.278 | 38,00 | > 55 | 1,06 | |
| **1.3** | **PP/A** **50/50** | 4,12 | 1.950 | 52,00 | > 55 | 0,72 | |
| **1.4** | **PP/A** **40/60** | 5,56 | 1.508 | 63,00 | > 55 | 0,29 | |
| **1.5** | **PP/A** **20/80** | Non Flammable | | | | | |

Comparing the physical and chemical characteristics of the products obtained with the starting residue and additive, it is proved that these characteristics differ from those of the starting materials therefore it has been produced, by the process object of the invention, new materials.

The results obtained permit the establishment of the maximal percentage of residue that can be mixed achieving the elimination of flammability. This value is related to the BET specific surface and adsorption capacity of the additive and to the flashpoint of hazardous waste, as noted above.

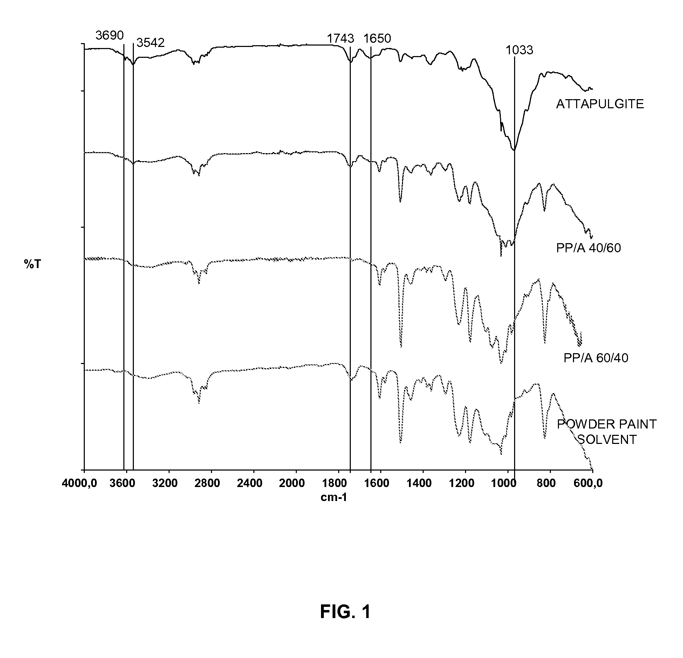

Figure 1 shows the FTIR spectra of waste, additive and obtained products, being able to check the following structural changes:
○ The intensity of bands corresponding to the stretching vibration of silanol groups, Si-OH, 3615 cm-1, decreases when the content of residue in the product increases. This indicates that the silanol groups of the clay and the organic molecules of the waste are joined by a covalent bond, which shows the existence of an adsorption process on the outer surface of the clays.
○ The bands corresponding to the stretching vibration of OH groups coordinated to magnesium (3,542 cm-1) show an increase in intensity and slight shift to lower wavelengths, indicating the presence of hydrogen bonds between organic components of the waste and structural water or coordination to clay.
○ In the area of spectrum between 1.800 and 650 cm-1 shows that the bands corresponding to adsorbed water (1.743 and 1.650 cm-1) are split, changing intensity and position with increasing the residue content of the product. These changes indicate the formation of hydrogen bonds between OH groups of water in clay and organic molecules present in the two residues.
○ It is also observed that the intensity of the band corresponding to vibration of Si-O bonds (1.033 cm-1) increases with the increase of residue content of the product.

### Example 2:

A pasty residue (resin) with the characteristics listed in Table 7 is mixed with a clay additive (sepiolite) with features that are also given in table 7.

**Table 7**

| | **Resin** | **Sepiolite** |
|---|---|---|
| **Aspect** | LP | S |
| **GCV (kcal/kg)** | 7.982 | Non flammable |
| **NCV (kcal/kg)** | 7.422 | Non flammable |
| **Humidity (%)** | 0,23 | 8,56 |
| **Fluorine (%)** | < 0,01 | 0,081 |
| **Chlorine (%)** | < 0,1 | < 0,1 |
| **Bromine (%)** | < 0,01 | < 0,01 |
| **Total halogen (%)** | < 0,1 | < 0,182 |
| **Sulphur (%)** | < 0,01 | < 0,01 |
| **Flashpoint (°C)** | 36,5 | > 100 |
| **Solvent adsorption capacity (%)** | | 116 |
| **BET Specific surface (m²/g)** | | 57 |
| **Average particle size (mm)** | | 0,529 |
| **Ash (%)** | 0,22 | 79,91 |
| **Cd+TI (ppm)** | n.d. | n.d. |
| **Hg (ppm)** | n.d. | n.d. |
| **Sb+As+Pb+Cu+Cr+Mn+Ni+V+Sn (ppm)** | < 350 | < 170 |
| **Total Metals (ppm)** | < 350 | < 170 |

These two components are mixed in different proportions, in the amounts shown in Table 8.

**Table 8**

| | **Resin (R)** | | | | |
|---|---|---|---|---|---|
| | **20%** | **40%** | **50%** | **60%** | **80%** |
| **Sepiolite (S)** | R/S 20/80 | R/S 40/60 | R/S 50/50 | R/S 60/40 | R/S 80/20 |

In this way, fuel products were obtained and their characteristics are shown in Table 9.

If the physical and chemical characteristics of the products obtained are compared with the starting residue and additive, it is found that these differ from those of both, this means that new materials have been created through the process of the invention. The most remarkable change is that the products are non-flammable and therefore non-hazardous, while the waste is flammable and therefore hazardous.

The results obtained, allow the determination of the maximal percentage of flammable material that can be mixed achieving the elimination of flammability. This value is related to the BET specific surface area and adsorption capacity of the additive and the flashpoint of a hazardous waste. Comparing the results of this example with those obtained in Example 1, it is observed that the flammable material in Example 2 has a higher flashpoint and therefore a lower content of substances responsible for the flammability that must be immobilized and consequently, the adsorbent material used also has lower BET surface than that used in Example 1, for a similar adsorption capacity of solvents. This means that in this second example, the maximal amount of flammable material that can be treated is 60 grams of flammable material per gram of adsorbent. Considering these results, and also that the adsorption capacity values are similar, it could be established a connection to predict a priori the maximum quantities of hazardous waste to be treated.

**Table 9**

| **Example** | **Product obtained** | **Humidity (%)** | **NCV (kcal/kg)** | **Ash (%)** | **Flashpoint (°C)** | **Sulphur content (%)** | **Aspect** |
|---|---|---|---|---|---|---|---|
| **2.2** | **R/S** **60/40** | 4,70 | 4.453 | 46,00 | > 55 | < 0,01 | Powder Solid |
| **2.3** | **R/S** **50/50** | 5,20 | 3.711 | 56,00 | > 55 | < 0,01 | |
| **2.4** | **R/S** **40/60** | 5,90 | 2.969 | 64,00 | > 55 | < 0,01 | |
| **2.5** | **R/S** **20/80** | 6,20 | 1.484 | 74,00 | > 55 | < 0,01 | |

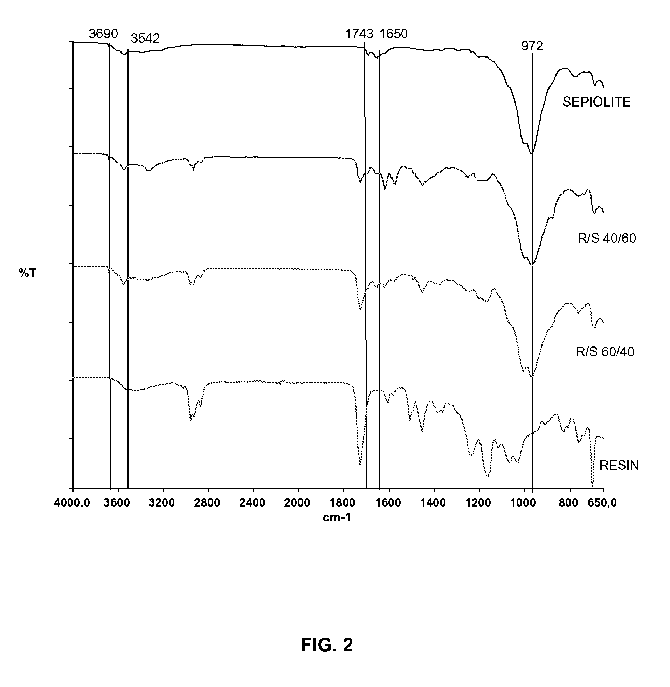

In addition, Figure 2 shows the FTIR of waste, additive and obtained products, being possible to observe the structural modifications produced on the starting materials and modifications that are of the same nature as those observed in the products included in Example 1.

### Example 3:

A pasty residue with the features shown in Table 10 (resin) is mixed with a granular non-hazardous industrial waste (pomace) that acts as an additive to the features listed in Table 10.

**Table 10**

| | **Resin** | **Pomace** |
|---|---|---|
| **Aspect** | LP | S |
| **GCV (kcal/kg)** | 7.982 | 4.394 |
| **NCV (kcal/kg)** | 7.422 | 4.066 |
| **Humidity (%)** | 0,23 | 3,38 |
| **Fluorine (%)** | < 0,01 | < 0,01 |
| **Chlorine (%)** | < 0,1 | < 0,1 |
| **Bromine (%)** | < 0,01 | < 0,01 |
| **Total Halogen (%)** | < 0,1 | < 0,1 |
| **Sulphur (%)** | < 0,01 | < 0,01 |
| **Flashpoint (°C)** | 36,5 | > 100 |
| **Solvent adsorption capacity (%)** | | 87 |
| **BET Specific Surface (m²/g)** | | 120 |
| **Average particle size (mm)** | | 0,95 |
| **Ash (%)** | 0,22 | 6,39 |
| **Cd+TI (ppm)** | n.d. | < 10 |
| **Hg (ppm)** | n.d. | n.d. |
| **Sb+As+Pb+Cu+Cr+Mn+Ni+V+Sn (ppm)** | < 350 | < 230 |
| **Total Metals (ppm)** | < 350 | < 230 |

Both components are mixed at different proportions, in the amounts indicated in Table 11.

**Table 11**

| | **Resin (R)** | | | | |
|---|---|---|---|---|---|
| | **20%** | **40%** | **50%** | **60%** | **80%** |
| **Pomace (M)** | R/O 20/80 | R/O 40/60 | R/O 50/50 | R/O 60/40 | R/O 80/20 |

Thus, fuel products were obtained and their characteristics are shown in Table 12.

If the physical and chemical characteristics of the products obtained are compared with the starting residue and additive, it is found that these differ from those of both, this means that new materials have been created through the process of the invention. The most remarkable change is that the products are non-flammable and therefore non-hazardous, while the waste is flammable and therefore hazardous.

In this example, the amount of flammable material to be mixed is similar to that of Example 2, despite the adsorbent material that behaves as an additive has a lower adsorption capacity of solvents. Nevertheless, this difference is compensated with respect to Example 2 by higher BET specific surface that increases the points of immobilization for the components responsible for flammability.

**Table 12**

| **Example** | **Product obtained** | **Humidity (%)** | **NCV (kcal/kg)** | **Ash (%)** | **Flashpoint (°C)** | **Sulphur content (%)** | **Aspect** |
|---|---|---|---|---|---|---|---|
| **3.2** | **R/O 60/40** | 1,60 | 4.928 | 3,00 | > 55 | < 0,01 | Solid Powder |
| **3.3** | **R/O 50/50** | 2,20 | 4.516 | 4,00 | > 55 | < 0,01 | |
| **3.4** | **R/O 40/60** | 2,70 | 4.439 | 5,00 | > 55 | < 0,01 | |
| **3.5** | **R/O 20/80** | 3,40 | 4.216 | 5,70 | > 55 | < 0,01 | |

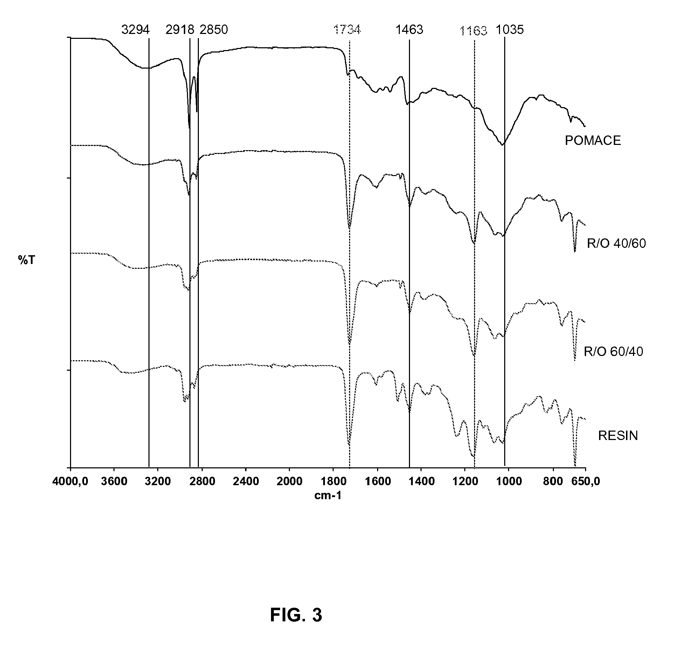

In addition, Figure 3 shows the FTIR of waste, additive and obtained products, possible to observe the structural modifications produced on the starting materials. The most important are:
○ The first difference is observed in the peak detected at a wavelength of 3.294 cm-1, possible due to the presence of alcohols and phenols. This peak decreases in intensity, though very slightly, and shifts to higher wavelengths. This peak is also present in the resin, although at slightly higher wavelengths, so the shift may be due to a change in the nature of the organic components attached to the pomace. By decreasing the amount of it and increasing the resin, organic compounds attached to the pomace resemble to those present in the resin.
○ The peaks corresponding to the presence of alkanes (2.918 and 2.850 cm-1) decreased significantly in intensity and shift to longer wavelengths. In the resin, at these wavelengths are observed three peaks, attributed also to the presence of alkanes, therefore, can be considered again that there is a combination of the organic components of the two residues.
○ In the case of the peaks representative of the aromatic rings (wavelengths 1.450-1.600 cm-1) of great importance in the pomace, it is observed that the peaks increase and that become more narrow, which means an increase of these components on pomace, and thus can be considered that some of the aromatic compounds detected in these products comes from the resin. This effect is greater the greater the amount of residue in the product.
○ On the other hand, the peak observed at 1.734 cm-1, although existing in the pomace, was unimportant, it becomes very intense in all products and is one of the main peaks in the resin. Similarly, the peak observed at a wavelength of 1.163 cm-1, is characteristic of the resin and proportional in the products to the content of resin in the mixtures.

### Example 4:

Paint sludge solvent from booths is mixed with sanding dust, with 26.4% by weight of the first. Table 13 shows the characteristics of the product.

**Table 13**

| **Product** | **Amount (kg)** | **%** | **% H2O** | **% Humidity** | **NCV (kcal/kg)** | **FP (°C)** | **Ash (%)** | **Aspect** |
|---|---|---|---|---|---|---|---|---|
| Sludge Solvent | 4,85 | 26,4 | 8,1 | 18,1 | 4.215 | > 60 | 22 | Solid Powder |
| Sanding dust | 13,5 | 73,6 | | | | | | |

### Example 5:

This example was carried out identically to Example 1 but the product was made in the form of cylindrical briquettes. Thus, the product obtained in examples 1.1 to 1.4 was introduced in a briquetting with a pressure of 200 bars for a minute using a circular mold with a radius of 5 cm and a height of 1 cm. Cylindrical briquettes were obtained perfectly manageable.

### Example 6:

This example was carried out identically to Example 4 but the product was made in cubic briquettes. Thus, the product obtained in Examples 1.1 to 1.4 was introduced in a briquetting with a pressure of 80 bar for two minutes using a cube-shaped mold with a 1 cm side cubic obtaining perfectly manageable briquettes.

Through the above examples, it is possible to observe, that through the process of the invention, is achieved by the immobilisation of flammable components of the flammable starting material, so that the material no longer produces flammable vapours. As a result, it can be obtained solid fuel with a high calorific value as well as a high flash point, making them non-flammable. It is therefore achieved, the goal of making from by-products of productive processes or hazardous or non-hazardous residues, products as fuels with disappearance also of its danger to obtain non-flammable when the starting materials were flammable and therefore dangerous.

### Bibliography

1) Morrison, G.L., "Manager composition of waste-derived fuel", US Pat. 5888256 (1999).
2) Trezza, M.A. y A.N. Scian, "Burning wastes as an industrial resource. Their effect on Portland cement clinker", Cement and Concrete Research, 30, 137-144 (2000).
3) Scala, F. y R. Chirone, "Fluidized bed combustion of alternative solid fuels", Experimental Thermal and Fluid Science, 28, 691-699 (2004).
4) Mokrzycki, E. y A. Uliasz-Bochenczyck, "Alternative fuels for the cement industry", Applied Energy, 74, 95-100 (2004, a).
5) Mokrzycki, E., A. Uliasz-Bochenczyck y M. Sarna. "Use of alternative fuels in the Polish cement industry", Applied Energy, 74, 101-111 (2004, b).
6) Gäbel, K., Tillman, A-M, "Simulating operational alternatives for future cement production", J. Cleaner Production, 13, 1246-1257 (2005).
7) López, F.A., A. López-Delgado, C. Pérez, J. Nuñez, "Utilización de arcillas en la estabilización e inertización de contaminantes orgánicos". XXXVIII Congreso Nacional de Cerámica y Vidrio", Segovia, Octubre 1998.
8) López, F.A., A. López-Delgado, C. Pérez, J. Nuñez, "Organic waste treatment by the used of clays". Actas del Global Symposium on Recycling Waste Treatment and Clean technology, San Sebastián, Septiembre 1999.
9) López, F.A., A. López Delgado, "Estabilización e inertización de residuos orgánicos mediante granulación con sepiolita", Residuos, 46 (1999).
10) Murcia, S., "Valorización de residuos como combustibles en cementera. Experiencia de la fábrica de Hisalba en Gádor", Encuentro Medioambiental Almeriense, Almería, 1998.
11) Cementos Lemona, "Combustibles Alternativos procedentes de residuos. Experiencias de Cementos Lemona en su fábrica de Lemoa (Bizkaia)" (2005).
12) Kääntee, U., R. Zevenhoven, R. Backman, M. Hupa, "The impact of alternative fuels on the cement manufacturing process", Actas del congreso R'2000 Recovery, Recycling, Re-integration. Ginebra (Suiza), Junio 2000.
13) Kääntee, U., R. Zevenhoven, R. Backman, M. Hupa, "Process Modelling of cement manufacturing using alternative fuels", Proceedings recycling and reuse of Used Tyres, Dundee (Escocia), Marzo 2001.
14) Kääntee, U., R. Zevenhoven, R. Backman, M. Hupa, "Cement Manufacturing using Alternative Fuels and the Advantages of Process Modelling", Actas del congreso R'2002 Recovery, Recycling, Re-integration. Ginebra (Suiza), Febrero 2002.
15) Lee, G.W., Lee, S.J., Jurng, J., Hwang, J., "Co-firing of paper sludge with high-calorific industrial wastes in a pilot-scale nozzle-grate incinerator", J. Hazardous Materials, B101, 273-283 (2003).
16) Lunghi, P., Burzacca, R., "Energy recovery from industrial waste of a confectionary plant by means of BIGFC plant", Energy, 29, 2601-2617 (2004).

## Claims

1. Process to manufacture a solid fuel product from at least one solid or viscous flammable material with a flashpoint below 54°C and at least one solid or viscous adsorbent material with a flashpoint above 55°C, **characterized in that** the procedure comprises the step of mixing the cited flammable material with the cited adsorbent material, the adsorbent material having the following physico-chemical characteristics:
a) a BET specific surface area above 50 m²/g;
b) an average particle diameter of less than 1 mm and
c) a solvent adsorption capacity of at least 80% by weight of solvent in relation to the weight of adsorbent material,
so that the resulting solid fuel product has a calorific value higher than 1.500 kcal/kg and a flashpoint above 55°C.

2. Process to manufacture a solid fuel product according to claim 1 wherein, during the mixing stage of the flammable material and the adsorbent material, a chemical reaction with the formation of covalent and/or hydrogen bonds between both materials is produced, causing the immobilization of the flammable components of the flammable material.

3. Process according to one of claims 1 or 2 wherein the flammable material and/or the adsorbent material are selected from residues or by-products of production processes such as used or expired varnish, traces of varnish, paint sludge, paint dust, sanding dust with and without varnish, dry sludge of purification, dry paint, pasty paint, toner, waste tank bottom, residues from cleaning tanks, distillation bottom, filter cakes, pruning waste, agricultural industry waste, food processing industry waste, invididually or in combination.

4. Process according to any one of claims 1 to 3, wherein the adsorbent material is an inorganic mineral material.

5. Process according to claim 4, wherein the inorganic mineral material is a clay.

6. Process according to any one of previous claims 1 to 5 wherein, during the mixing stage of the flammable material and the adsorbent material, these materials are mixed in a ratio between 20/80 and 80/20 respectively.

7. Process according to claim 6, wherein the mixing stage is made by mixing at a speed between 200 and 1500 rpm for a time between 1 and 30 minutes until a homogeneous product is obtained.

8. Process according to any one of previous claims 1 to 7 wherein, prior to the mixing stage of the flammable material and the adsorbent material, when at least one of the two materials is a pasty solid a premix stage of said pasty solid material with an additional powdery material is performed in order to adequate its manageability.

9. Process according to claim 8, wherein the additional powdery material is selected from by-products of solid production processes or inorganic minerals materials and has a particle diameter of less than 1 mm.

10. Process according to any one of the preceding claims wherein, when at least one of the flammable material and the adsorbent material has a moisture content above 15%, said material is subjected to a drying stage prior to the mixing or premix stage until a humidity below 15% is achieved.

11. Process according to claim 10 wherein the drying step is performed with hot air at a temperature between 90°C and 120°C for a time between 1 and 24 hours.

12. Process according to any one of the preceding claims wherein, when at least one of the flammable material and the adsorbent material has a particle size greater than 1 mm, said material is subjected to a size reduction step prior to the mixing or premix stage until its size is less than 1 mm.

13. Process according to any one of the preceding claims wherein the resulting fuel product undergoes a final stage of compaction, thereby resulting in granules, pellets or briquettes.

14. Process according to any one of the preceding claims wherein the resulting fuel product has a calorific value higher than 3.500 kcal/kg.

15. Fuel product obtained from the process of any one of claims 1 through 14 above.
